# EUROPEAN PATENT SPECIFICATION

(11) **EP 2 745 487 B1**
(45) Date of publication and mention of the grant of the patent: **07.10.2015**
(21) Application number: 12746372.7
(22) Date of filing: 16.08.2012
(51) Int. Cl.: H04L 29/06, G01D 4/00, H02J 13/00

(54) **SECURE BROADCASTING OF INSTRUCTIONS TO CONSUMPTION METERS**
SICHERES SENDEN VON ANWEISUNGEN AN VERBRAUCHSMESSER
RADIODIFFUSION SÉCURISÉE D'INSTRUCTIONS VERS DES COMPTEURS DE CONSOMMATION

(30) Priority: 17.08.2011 EP 11177813
(43) Date of publication of application: 25.06.2014
(73) Proprietor: Kamstrup A/S, 8660 Skanderborg (DK)
(72) Inventor: HALD, Flemming, DK-8370 Hadsten (DK); CHRISTIANSEN, Johnny Dørken, DK-8464 Galten (DK)
(74) Representative: Plougmann & Vingtoft A/S
(86) International application number: PCT/EP2012/066004
(87) International publication number: WO 2013/024135

(56) References cited:
- WO-A1-01/15099
- WO-A1-2006/059195
- US-A- 6 100 817
- US-A1- 2010 306 533

## Description

### FIELD OF THE INVENTION

The present invention relates to a system for communicating consumption data. In particular the invention relates to sending instructions to consumption meters arranged in a communication network.

### BACKGROUND OF THE INVENTION

Consumption meters for measuring consumption data of a supplied utility, for example electricity meters, heat meters for district heating, and water meters for cold water, are often equipped with a communication unit for remote communication with the meter, and capabilities of being arranged in a communication network. One type of communication network is a radio network where data are communicated using radio frequency signals. Another type of communication network is a Power Line Communication (PLC) system where modulated carrier signals are impressed on the AC electricity supply net wires. While networks for remote communication with meters have proven useful in terms of establishing highly efficient communication lines to the individual meters, the communication is challenged by the long-range nature of the signals which opens for unauthorized third-party access to the communication between a meter and the utility provider. Consumption data is considered personal data and should not be exposed to unauthorized third parties. In addition to the communication of consumption data, advanced consumption meters may also comprise remote controlled functionalities, such as relay functions, display functions, register update functions, valve control, etc. To ensure secrecy in the communication each consumption meter may communicate with the utility provider using individual encryption keys. Targeted secret communication to a group of consumption meters in a large network, however, requires considerable networks resources. Moreover, the network topology of a meter network is typically hybridized comprising mesh networks, tree networks, star networks, etc. to form a complete network connecting all meters with an assigned collector. In a complex topology, the travel time of a data message from the collector to the meter may be quite long, and the distribution time of a collective message send to a group of meters may vary within a rather large time window, even up to one hour.

US 6 100 817 discloses a system of utility meters and a collector arranged in a network wherein the collector can send commands to a selected group of meters by broadcasting a single command and assigning a unique window of time to each meter, during which the meter is allowed to respond.

Fast communication in a network can be obtained by broadcasting a message to be received by all meters. However, broadcasting cannot be directed to specific meters and is therefore not considered as a secure channel.

### SUMMARY OF THE INVENTION

It would be advantageous to achieve a system of consumption meters and a collector arranged in a network, where the collector can send out instructions to a selected group of consumption meters in a complex meter network with a low distribution time in a secure manner. In general, the invention preferably seeks to provide an alternative solution which mitigates, alleviates or eliminates one or more disadvantages of prior art systems.

Accordingly, in a first aspect, there is provided a system of a plurality of consumption meters each arranged for measuring consumption data of a supplied utility, and a data collector for collecting the consumption data, the consumption meters and the data collector comprises a communication unit for data communication in a network,
each consumption meter stores a meter ID so it is individually identifiable in the network, and each consumption meter is capable of storing one or more tokens received via the network, and each consumption meter is capable of executing an instruction comprised in a data message received via the network,
where the data collector is arranged in a first step for sending out via the network a token to a selected group of the plurality of the consumption meters,
where the data collector is arranged in a second step for broadcasting in the network data messages comprising an instruction to be executed by each of the consumption meters of the selected group of the plurality of the consumption meters, and to attach a token to the data message,
where the consumption meter upon receipt of a data message with a token attached compares the token with any stored tokens, and upon a match accepts the data message and executes the instruction, and otherwise disregards the message.

The inventors of the present invention have realized that for messages send to consumption meters, it is not always the information conveyed by the messages which is critical for the security of the system, but the ability to control the functionality of the consumption meter. For example, a meter may comprise a remotely controlled relay which can couple a household in and out from the supply net. The information that a meter is coupled out of the supply net is not necessarily secret since such information may be obtained by other means. However, it is important that the act of coupling a consumption meter in and out of the supply net is not controlled by unauthorized third-parties. Another example is tariffs used by the consumption meter to calculate the cost of the consumption. Such tariffs are public available. However, it is important that unauthorized third-parties cannot alter the tariff of the meter.

To obtain a secure way of sending out instructions in a network in a fast manner, consumption meters and collectors of the present invention has the ability to communicate using a scheme which split the communication in two phases, a first preparation phase where the targeted group of consumption meters receives a token via the network, and a second executing phase where the instructions together with a token are broadcast in the network. Only meters which have been provided with the token in the first phase are capable of executing the instructions received in the second phase.. In this manner, a message may be broadcast, even in unencrypted form, since only consumption meters which store a matching token received in the first phase will accept the message, and execute the instructions of the message. By secure handling of the tokens, the security of the system is not jeopardized. And due to the broadcasting, the time lag from sending out the instructions to the selected group and to the actual execution of the instructions of all meters in the selected group is small.

The terms executing an instruction comprised in a data message is to be construed broadly to encompass any suitable means of constructing a data message and ensuring that the consumption meter performs the task as defined by the instructions. Such tasks include, but are not limited to, coupling in and out the supplied utility which is monitored by the consumption meter, configuration of the consumption meter, setting tariff tables in the consumption meter, showing information to a user in a display of the consumption meter, etc.

The consumption meters may in embodiments be a charging consumption meters for charging an amount of a supplied utility. The consumption meter may be an energy meter for metering an amount of energy consumed, a heat meter for district heating, a cooling meter for district cooling, a water meter for distributed water, e.g. drinking water, a gas meter and/or an electricity meter. The consumption meter may be a legal meter, i.e. a meter which is subdued to regulatory demands. Such regulatory demands may be demands to the precision of the measurements.

In further aspects of the invention, there are provided a consumption meter and a data collector for use in a system in accordance with the first aspect. Additionally, there is provided a method of instructing a selected group of a plurality of consumption meters via a data message sent in a network of consumption meters.

In general the various aspects of the invention may be combined and coupled in any way possible within the scope of the invention. These and other aspects, features and/or advantages of the invention will be apparent from and elucidated with reference to the embodiments described hereinafter.

### BRIEF DESCRIPTION OF THE DRAWINGS

Embodiments of the invention will be described, by way of example only, with reference to the drawings, in which
Fig. 1 illustrates in a schematic way a system comprising a plurality of consumption meters, a data collector and communication devices arranged in a radio network,
Fig. 2 schematically illustrates an embodiment of a consumption meter together with a data collector, and
Fig. 3 illustrates further aspects of embodiments of the present invention of the network depicted in general form in Fig. 1.

### DESCRIPTION OF EMBODIMENTS

Embodiments of the present invention are disclosed in connection with a radio network. While the invention is relevant for all types of meter networks arranged in a complex topology, the invention is particularly relevant for networks which support complex topologies. In radio networks, the number of assigned meters to each concentrator may be much larger than in PLC networks, and a radio network may generally support a more complex topology than a PLC network.

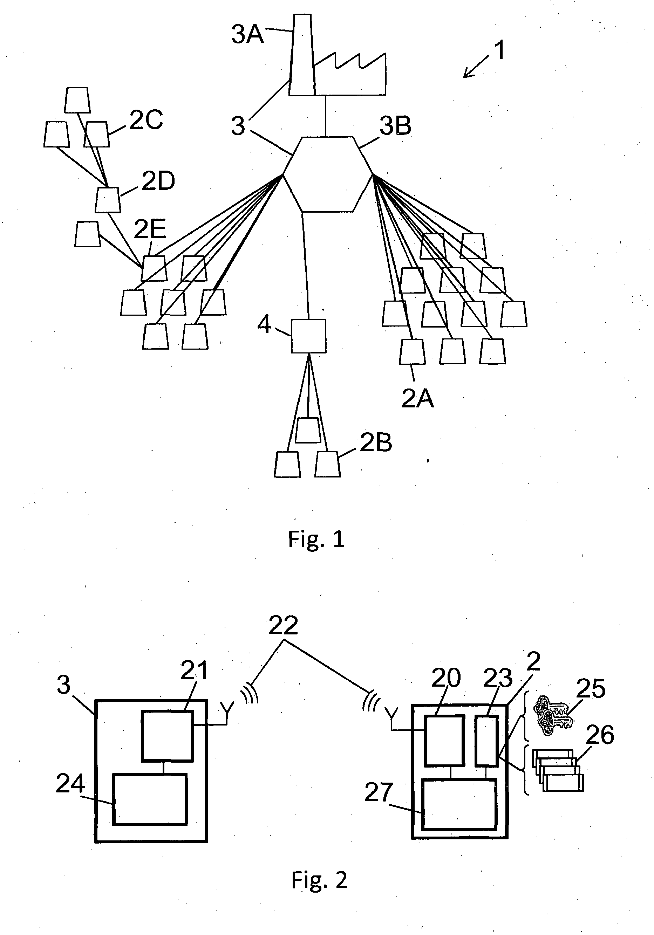

An embodiment of the invention is illustrated in Fig. 1. The figure illustrates a system 1 comprising a plurality of consumption meters 2, 2A-2E and a data collector 3, 3A, 3B, here in the form of a sub-collector and a main collector. The main collector being the collection system of the utility provider 3A, whereas the sub-collector being a concentrator unit 3B arranged as a concentrator node in the network to collect consumption data from a group of consumption meters. The total network is advantageously a radio network, however at least the network between the concentrator and the consumption meters is a radio network, whereas the link between the two collector parts may be of any suitable type. The number of consumption meters in the plurality of meters may range from a few hundreds of meters to several thousands of meters connected in the network.

To ensure a network where all nodes (i.e. the consumption meters and other network devices) are connected in a way so there is a communication path between each consumption meter and the main collector, a rather complex network often results, in particular in residential areas. For example meter 2A is connected to the main collector 3A via direct connection to the concentrator 3B, such a meter may be referred to as a zero level meter. The meter 2B is connected to the concentrator via a router node 4. Such meter is a first level meter. The meter 2C is connected to the concentrator via meter 2D and 2E, which acts as router or repeater nodes. The meter 2C is a second level meter. In a real large scale network, a large number of high level consumption meters may be found. The network may also be referred to as a multi-hop network. However, generally the network is a hybridized network based on a number of basic topologies, including but not limited to point-to-point, star, tree and mesh as the important topology types.

To ensure secure communication between the collector and each consumption meter, each consumption meter stores one or more encryption keys, where at least one of the encryption keys is individually assigned to each meter, so that each meter can report individually encrypted consumption data back to the utility provider, as well as receive individually encrypted messages from the utility provider. The utility provider also stores the various encryption keys. The individual encryption keys may be given to the meter at the factory, loaded into it via a secure process at the use-site or generated, e.g. based on a seed algorithm or other key generating processes. Such a system therefore exhibits a very high security level. However, the distribution time of a data message through a complex network of an individually addressed message may be quite high, and may vary somewhat between different meters in the network. A data message send out to a group of consumption meters via individual addressing may arrive several minutes apart depending on the size of network, levels of the addressed meters, as well as other parameters.

A low distribution time of a message send from the collector node may be obtained by broadcasting the message in the network. However, broadcast messages cannot be individually encrypted and the security of the message may be jeopardized. Embodiments of the present invention provides a solution for broadcasting a message in a secure manner into a communication network of individually encrypted consumption meters which both ensures low distribution time to all meters and a high level of security.

Fig. 2 schematically illustrates an embodiment of a consumption meter 2 together with a collector 3 in accordance with embodiments of the present invention. Thus the figure illustrates elements of the system more generally depicted in Fig. 1.

The consumption meter 2 and the collector 3 both comprise communication units 20, 21 for bidirectional radio communication 22. The consumption meter comprises a storage unit 23 which stores one or more encryption keys 25, where at least one of the encryption keys is a unique encryption key for individually encrypted communication between each consumption meter and the collector. The consumption meter further stores a meter ID so that it is individually identifiable in the radio network. Additionally, the consumption meter is capable of storing one or more tokens 26, as well as comparing any received tokens, attached to a received message, with any stored tokens. The consumption meter also comprises a controller 27 for controlling the various functions of the meter.

The token 26 may be any data structure suitable for secure identification. In an example, the token may be a data file or object which stores a code or key. The token is an identifier which ensures that a message attached with the token can be identified and accepted by the meter if the meter stores a matching token. The token may be implemented in any suitable way. The complexity of the token should be so that the system can survive brute force attacks, for example the size of the token may be larger than 128 bits.

The data collector 3 is arranged for sending out data messages attached with a token, so upon receipt of such data message, the consumption meter compares the token of the message with any stored tokens. If a match is found, the consumption meter accepts the data message and performs the instructions of the message, and otherwise disregards the message. The functional elements of the collector 3 are generally depicted by box 24. Moreover, both the consumption meter 2 and the collector 3 may comprise additional components.

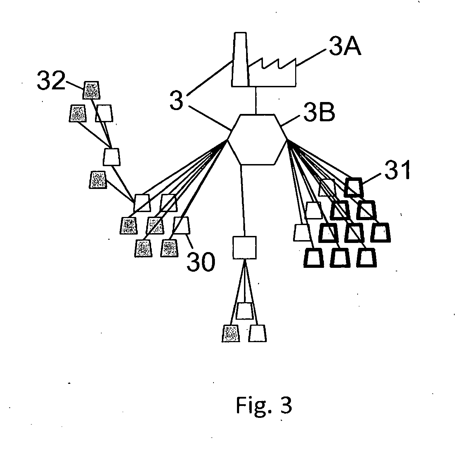

Fig. 3 illustrates further aspects of embodiments of the present invention. The figure schematically shows the radio network in the general form as depicted in Fig. 1. However in Fig. 3, the consumption meters are divided in three groups 30-32. The groups are selected by a system operator in accordance with a given selection criteria. In general, any group of meters may be selected among the plurality of meters. In a given situation, the selected group may be the entire group of the plurality of meters. However, typically a sub-group is selected.

In the illustrated embodiments, the collectors are split in a main collector 3A and a sub-collector 3B. The main collector is typically residing at the utility provider or at a service provider which undertakes the collection of data. A real complete network normally comprises a number of sub-collectors in the form of concentrators 3B which collects data from a large group of consumption meters assigned to it in the network, and which each report collected data back to the main collector 3A. Thus generally a number of concentrators are present, each being connected to the main collector 3A. The functionality of the collector is in this embodiment split between the main collector where a controlling part resides, and the concentrator which receives instructions from the main collector to be executed by the concentrator.

In an embodiment, the main collector comprises a token engine which based on user input creates and maintains lists of consumption meters and associated tokens, and ensures that once a token is assigned to a particular consumption meter, the token is forwarded to the consumption meter via the concentrator. The token engine may be distributed so that the controlling part of the token engine resides at the back-end, whereas the executing part is implemented in the concentrator. A concentrator device may be provided with a high level of computing power, and the maintenance of the token lists may be dealt with by the concentrator based on general instructions provided by the main collector. The tokens may be distributed to the selected group of meters via unicasting, multicasting, addressed routing in the network, or any suitable technique for directing a data structure to a given meter in the network.

In an embodiment, the plurality of consumption meters may be arranged in groups, each group being defined by a group token stored at the consumption meters being part of the given groups. In the example situation as depicted in Fig. 3, three groups of consumption meters are defined. These groups may be defined from the geographic location of the consumption meter, the specific structure of the supply net, the network topology, or other criteria. Once assigned, the token engine generates three tokens: T0, T1 and T2, and instructs the concentrator to forward these tokens to the selected groups of assigned meters which upon receipt stores the tokens in their internal memory, so that group 30 receives token T0, group 31 receives token T1 and group 32 receives token T2. A consumption meter may receive a number of tokens, and thereby participate in a number of groups, where group members of a specific group share a token.

To instruct the consumption meters of the group 31 to couple out the household where the meter resides from the electricity net, couple out instructions are broadcast in the radio network, however together with the broadcast message, token T1 is attached. In this manner all meters of the network receives the message very fast, however only the meters of group 31 which already stores the matching token T1 will execute the instructions of the message. Compared to instructing all meters of the group individually, the distribution time of the message is much shorter and all meters of the group receives the message within a much smaller time span than if individually messages were sent. By secure handling of the tokens, the security of the system is not jeopardized.

In embodiments, a single broadcast message comprises two or more tokens and instructions to one or more groups of consumption meters to execute two or more tasks.

For example, three groups of consumption meters: group 1, group 2 and group 3, stores the following tokens:
Group 1: T_{A}, T_{B} and T_{C},
Group 2: T_{D}, T_{E} and T_{F}, and
Group 3: T_{G}, T_{H} and T_{I}.

In one example, couple out instructions should be executed by group 1 and group 3, but not by group 2. In a single broadcast, couple out instructions are attached with token TA and T_{G}. Upon receipt of the broadcast message at the consumption meters of group 1 and group 3, matching tokens are stored and the instructions executed, whereas at the consumption meters of group 2, no matching tokens are stored and the broadcast message is disregarded. The same functionality could alternatively be obtained by also storing token T_{A} at group 3.

In another example, two different tasks should be executed by a single group and only that group. For example the consumption meters of group 3 should receive in a single broadcast message couple out instructions together with a service announcement to be shown on the display of the consumption meter as to the reason and duration of the out-coupling. In this case, a data message is constructed comprising instructions to couple out the relay of the meter together with instructions to show a service announcement on the display, and the tokens T_{H} and T_{I} are attached to the message. The tokens may be valid only for the specified functionality or the meter may otherwise be programmed how to handle more instructions and more tokens in a single message.

In yet another example, two different tasks should be executed by two different groups. For example couple in instructions should be sent to group 1 whereas couple out instruction should be sent to group 2. In this case, tokens which are valid only for a specified functionality is used. By specifying, by any suitable means, that token T_{B} is a couple in token and that token T_{E} is a couple out token, a single broadcast message comprising tokens T_{B} and T_{E} would result in that the consumption meters of group 1 are instructed to execute the couple in instructions, whereas the consumption meters of group 2 are instructed to execute the couple out instructions.

By linking the token to a given functionality, a single broadcast message may be constructed to instruct any number of consumption meters to perform a range of functionalities, as long as the proper tokens have been distributed to the consumption meters in advance. A versatile system is thus provided which both support broadcasting a complicated message with minimal network load as well as broadcasting simple messages, but which may result in a higher network load if a large number of instructions are to be sent.

The security of the token handling may rely on a number of factors used singly or in combination for increased security.

The security of the system is based on secure handling of the tokens. This may be obtained by ensuring that the controlling part of the token engine resides at a secure back-end, i.e. at a secure computer system of the utility provider or service provider. By ensuring that the tokens are handled securely, the message send out with the tokens need not necessarily be kept secret. The message with the attached token may consequently be non-encrypted without jeopardizing the security of the system. However, to obtain secrecy of the message to a certain extent, the consumption meter may store additional shared or non-unique encryption keys, so that the message is encrypted with this shared encryption key. The encryption key may be stored at the secure back-end, and not at the concentrator which merely administrates the distribution of the message.

In an important embodiment, the tokens are distributed to the assigned consumption meters in encrypted form, encrypted with the individual encryption key of the consumption meter to which it is assigned. In this way the built-in high security scheme based on individual encryption keys is utilized to achieve a highly secure token handling.

In embodiments, the system may implement that the token is valid for a number of times. A counter may be associated with each token, where the counter is decremented by one each time a token is used. Once a token has been used the number of times for which it was valid, the stored token of the consumption meter is deleted from the consumption meter. In a particular embodiment, the token may be a one-time pass token. One-time pass tokens are easy to administrate, and may advantageously be used together with an embodiment, where the data collector resends the message with the attached token one or more times. By resending the data message, the probability that a broadcast message reach all meters in the network is increased. This may be relevant in networks where the network coverage may be influenced by disturbing factors, in networks where the backbone structure is not running optimally, etc. If the token is a one-time pass token, a consumption meter may receive the broadcast message many times, but only the first time it is received is the message accepted since for any subsequent receipts, the meter does not store the matching token anymore. In general, the token may specify a specific number of times for which it is valid, such as 3, 5, 10 or any other number. The token may also specify that it is valid for an unlimited number of times.

In embodiments, the system may implement that the token is valid for a time period, and when the time period has passed, the stored token of the consumption meter is deleted.

In embodiments, the token may be valid for a specified functionality. In one embodiment, the data message specifies the functionality and only if the specified functionality of the token and the specified functionality of the message match the data message is accepted and the instruction executed, and otherwise disregarded. In another embodiment, the specified functionality may be specified by the token itself, in this case the data message need not comprise further elements than the token with the specified functionality. Upon receipt of such token, the consumption m can determine the functionality to be executed by it. In another embodiment, the specified functionality for which the token is applicable is delivered together with, but separate from, the token. In this manner, the token itself does not convey information about an allowed use and may have a simple structure, but nevertheless the functionality of the meter associated with the token is restricted.

By limiting the circumstances under which the tokens can be used, the use of the tokens can be controlled. This may e.g. be used in connection with providing third-parties with certain tokens. For example, a third-party may be given access to communication with consumption meters for service announcements. Such tokens may be handled with a relative low security level and may be handed over to a third party.

In embodiments of the present invention, messages are broadcast to consumption meters by performing the following general steps, which may be split in a first preparation phase and a second execution phase. The preparation phase may be implemented to run as a background operation.

In the preparation phase, tokens are distributed to assigned meters so that they are available at the relevant meters when needed. The tokens should normally be distributed in a secure manner, for example as mentioned by encrypting the tokens with the individual key of the assigned meter. In the preparation phase, the data collector is instructed to generate tokens or it receives tokens generated at a token generator, address the tokens in accordance with the meters intended for receipt of the tokens, typically by the relevant meter ID, and forward the token via the network to the addressed meter. Upon receipt of a token addressed to the meter, the meter stores the token in the meter storage.

In the execution phase group messages is broadcast via the network. The collector receives or generates a message and attaches a token to it, which match tokens stored at the group of consumption meters to which the message is to be sent. Then the message is broadcast in the network.

Upon receipt of a broadcast message, the consumption meter compares the attached token with any stored tokens, and only if it stores a matching token, e.g. an identical token, accepts the data message and executes the instructions of the message. If no matching tokens are stored in the consumption meter prior to the receipt of the message, the message is disregarded.

Although the present invention has been described in connection with the specified embodiments, it should not be construed as being in any way limited to the presented examples. The invention can be implemented by any suitable means; and the scope of the present invention is to be interpreted in the light of the accompanying claim set. Any reference signs in the claims should not be construed as limiting the scope.

## Claims

1. A system (1) of a plurality of consumption meters (2) each arranged for measuring consumption data of a supplied utility, and a data collector (3) for collecting the consumption data, the consumption meters and the data collector comprises a communication unit for data communication in a network,
each consumption meter stores a meter ID so it is individually identifiable in the network, and each consumption meter is capable of storing one or more tokens (26) received via the network, and each consumption meter is capable of executing an instruction comprised in a data message received via the network,
where the data collector is arranged in a first step for sending out via the network a token to a selected group of the plurality of the consumption meters,
where the data collector is arranged in a second step for broadcasting in the network data messages comprising an instruction to be executed by each of the consumption meters of the selected group of the plurality of the consumption meters, and to attach a token to the data message,
where the consumption meter upon receipt of a data message with a token attached compares the token with any stored tokens, and upon a match accepts the data message and executes the instruction, and otherwise disregards the message.

2. The system according to claim 1, wherein the token is valid for a number of times, and wherein once a token has been used the number of times, the stored token of the consumption meter is deleted from the consumption meter.

3. The system according to claim 1, wherein the token is valid for a time period, and wherein when the time period has passed, the stored token of the consumption meter is deleted.

4. The system according to any of the preceding claims, wherein the token is valid for a specified functionality.

5. The system according to any of the preceding claims wherein the token is send out in the network to the selected group of the plurality of consumption meters by a series of unicast processes, by a multicast process, or a series of addressed routings in the network.

6. The system according to any of the preceding claims, wherein the data collector re-broadcast the message with the attached tokens one or more times.

7. The system according to any of the preceding claims, wherein the data message with the attached tokens is non-encrypted.

8. The system according to any of the claims 1-6, wherein each consumption meter further stores one or more non-unique encryption keys, and where the data message with the attached tokens is encrypted with a non-unique encryption key.

9. The system according to any of the preceding claims, wherein the data collector comprises a token engine which continuously maintains lists of consumption meters and associated tokens as well as manages distribution of tokens via the network to assigned consumption meters.

10. The system according to claim 9, wherein data collector is distributed over more communicatively linked entities, and where the token engine is also distributed, and wherein a controlling part of the token engine is residing at a secure back-end, the controlling part instructing an executing part residing outside the secure back-end.

11. The system according to the claim 10, wherein each consumption meter further stores one or more non-unique token encryption keys, and where the data message with the attached token is encrypted with the token encryption key, and wherein the token encryption key is stored in the consumption meter and at the secure back-end, but not in the executing part of the token engine.

12. The system according to any of the preceding claims, wherein the tokens are distributed to the assigned consumption meters in encrypted form, and wherein a token is encrypted with an individual encryption key of the consumption meter to which it is assigned.

13. A consumption meter (2) for use in a system according to any of the claims 1-12, wherein the consumption meter is arranged for measuring consumption data of a supplied utility, and wherein the consumption meters comprises a communication unit (20) for data communication with an assigned data collector in a network,
the consumption meter stores a meter ID, so it is individually identifiable in the network, and the consumption meter is capable of storing one or more tokens (26) received via the network, and is capable of executing an instruction comprises in a data message received via the network,
upon receipt of a data message with a token attached the consumption meter compares the token with any stored tokens, if the received token match a stored token, the consumption meter accepts the data message and executes the instruction, otherwise it disregards the message.

14. A data collector (3) for use in a system according to any of the claims 1-12 wherein the data collector is arranged for collecting consumption data received from an assigned consumption meter (2), the data collector comprises a communication unit (21) for data communication with assigned consumption meters in a network, and
wherein the data collector is arranged in a first step for sending out data messages attached with a token to a selected group of the plurality of the consumption meters, and
where the data collector is arranged in a second step for broadcasting in the network data messages comprising an instruction to be executed by each of the consumption meters of the selected group of the plurality of the consumption meters, and to attach a token to the data message,.

15. A method of instructing a selected group of a plurality of consumption meters via a data message sent in a network, the selected group of the plurality of consumption meters form part of a system comprising a data collector and a plurality of consumption meters arranged in a network in accordance with claims 1-12, the method comprising:
• in the data collector:
∘ sending out via the network a token to the selected group of the plurality of the consumption meters
∘ receive or generate a message comprising an instruction to be executed by each of the consumption meters of the selected group of the plurality of the consumption meters,
∘ attach a token to the message, and
∘ broadcast the message in the network,
• in the consumption meter upon receipt of a data message with a token attached:
∘ compare the token with any stored tokens,
∘ if the received token match a token stored in the consumption meter prior to receipt of the message, accept the data message and execute the instruction, otherwise disregards the message.

16. The method according to claim 15, further comprising:
• in the data collector
∘ generate or receive a token assigned to the selected group of the plurality of the consumption meters in the network,
∘ address the token by means of the meter ID for individual identification of the meter in the network,
∘ forward the token via the network to the each of the consumption meters of the selected group of addressed meters,
• in the consumption meter upon receipt of a token addressed to the meter:
∘ store the token in a meter storage.

## Patentansprüche

1. System (1) mit einer Mehrzahl von Verbrauchsmessgeräten (2), die jeweils zum Messen von Verbrauchsdaten einer gelieferten Verbrauchsmenge angeordnet sind, und einem Datensammler (3) zum Erfassen der Verbrauchsdaten, wobei die Verbrauchsmessgeräte und der Datensammler eine Kommunikationseinheit für den Datenaustausch in einem Netzwerk umfassen,
wobei jedes Verbrauchsmessgerät eine Messgerätkennung speichert, sodass es in dem Netzwerk individuell identifizierbar ist, und jedes Verbrauchsmessgerät in der Lage ist, einen oder mehrere, über das Netzwerk empfangene Token (26) zu speichern, und jedes Verbrauchsmessgerät in der Lage ist, eine Anweisung umfassend eine über das Netzwerk empfangene Datenmitteilung auszuführen,
wobei der Datensammler in einem ersten Schritt dazu angeordnet ist, ein Token über das Netzwerk an eine ausgewählte Gruppe der Mehrzahl von Verbrauchsmessgeräten zu senden,
wobei der Datensammler in einem zweiten Schritt dazu angeordnet ist, Datenmitteilungen umfassend eine von jedem der Verbrauchsmessgeräte der ausgewählten Gruppe der Mehrzahl von Verbrauchsmessgeräten auszuführende Anweisung in dem Netzwerk rundzusenden und ein Token an die Datenmitteilung anzuhängen,
wobei das Verbrauchsmessgerät nach Empfang einer Datenmitteilung mit angehängtem Token das Token mit gespeicherten Tokens vergleicht und nach Übereinstimmung die Datenmitteilung akzeptiert und die Anweisung ausführt und ansonsten die Mitteilung ignoriert.

2. System nach Anspruch 1, wobei das Token mehrere Male gültig ist und wobei das gespeicherte Token des Verbrauchsmessgeräts im Verbrauchsmessgerät gelöscht wird, wenn das Token die mehreren Male benutzt wurde.

3. System nach Anspruch 1, wobei das Token für einen Zeitraum gültig ist und wobei das gespeicherte Token des Verbrauchsmessgeräts gelöscht wird, wenn der Zeitraum abgelaufen ist.

4. System nach einem der vorhergehenden Ansprüche, wobei das Token für eine bestimmte Funktion gültig ist.

5. System nach einem der vorhergehenden Ansprüche, wobei das Token in dem Netzwerk über eine Serie von Unicast-Prozessen, über einen Multicast-Prozess oder eine Serie von adressierten Routings in dem Netzwerk zu der ausgewählten Gruppe der Mehrzahl an Verbrauchsmessgeräten gesendet wird.

6. System nach einem der vorhergehenden Ansprüche, wobei der Datensammler die Mitteilung mit den angehängten Tokens ein Mal oder mehrere Male erneut rundsendet.

7. System nach einem der vorhergehenden Ansprüche, wobei die Datenmitteilung mit den angehängten Tokens nicht verschlüsselt ist.

8. System nach einem der Ansprüche 1-6, wobei jedes Verbrauchsmessgerät weiterhin einen oder mehrere nicht einmalige Kryptierungsschlüssel speichert und wobei die Datenmitteilung mit den angehängten Tokens mit einem nicht einmaligen Kryptierungsschlüssel verschlüsselt ist.

9. System nach einem der vorhergehenden Ansprüche, wobei der Datensammler eine Token-Engine umfasst, die kontinuierlich Listen mit Verbrauchsmessgeräten und damit verbundenen Tokens pflegt sowie die Verteilung von Tokens an zugewiesene Verbrauchsmessgeräte über das Nestnetzwerk verwaltet.

10. System nach Anspruch 9, wobei der Datensammler über mehrere kommunikativ miteinander verbundene Einheiten verteilt ist und wobei die Token-Engine ebenfalls verteilt ist und wobei ein Steuerteil der Token-Engine in einem sicheren Backend sitzt, wobei das Steuerteil einem ausführenden Teil außerhalb des sicheren Backends Anweisungen erteilt.

11. System nach Anspruch 10, wobei jedes Verbrauchsmessgerät weiterhin einen oder mehrere nicht einmalige Token-Kryptierungsschlüssel speichert und wobei die Datenmitteilung mit dem angehängten Token mit dem Token-Kryptierungsschlüssel verschlüsselt ist und wobei der Token-Kryptierungsschlüssel in dem Verbrauchsmessgerät und dem sicheren Backend, aber nicht in dem ausführenden Teil der Token-Engine gespeichert ist.

12. System nach einem der vorhergehenden Ansprüche, wobei die Tokens in verschlüsselter Form an die zugewiesenen Verbrauchsmessgeräte verteilt werden und wobei ein Token mit einem individuellen Kryptierungsschlüssel des Verbrauchsmessgeräts, dem es zugewiesen ist, verschlüsselt ist.

13. Verbrauchsmessgerät (2) zur Verwendung in einem System nach einem der Ansprüche 1-12, wobei das Verbrauchsmessgerät zum Messen von Verbrauchsdaten einer gelieferten Verbrauchsmenge angeordnet ist und wobei die Verbrauchsmessgeräte eine Kommunikationseinheit (20) für den Datenaustausch mit einem zugewiesenen Datensammler in einem Netzwerk umfassen,
wobei das Verbrauchsmessgerät eine Messgerätkennung speichert, sodass es in dem Netzwerk individuell identifizierbar ist, und das Verbrauchsmessgerät in der Lage ist, einen oder mehrere, über das Netzwerk empfangene Token (26) zu speichern, und in der Lage ist, eine Anweisung umfassend eine über das Netzwerk empfangene Datenmitteilung auszuführen,
wobei das Verbrauchsmessgerät nach Empfang einer Datenmitteilung mit einem angehängten Token das Token mit gespeicherten Tokens vergleicht, und das Verbrauchsmessgerät, falls das empfangene Token einem gespeicherten Token entspricht, die Datenmitteilung akzeptiert und die Anweisung ausführt und ansonsten die Mitteilung ignoriert.

14. Datensammler (3) zur Verwendung in einem System nach einem der Ansprüche 1-12, wobei der Datensammler zum Sammeln von Verbrauchsdaten angeordnet ist, die von einem zugewiesenen Verbrauchsmessgerät (2) empfangen werden, wobei der Datensammler eine Kommunikationseinheit (21) für den Datenaustausch mit zugewiesenen Verbrauchsmessgeräten in einem Netzwerk umfasst, und
wobei der Datensammler in einem ersten Schritt dazu angeordnet ist, Datenmitteilungen mit einem angehängten Token an eine ausgewählte Gruppe der Mehrzahl von Verbrauchsmessgeräten zu senden,
wobei der Datensammler in einem zweiten Schritt dazu angeordnet ist, Datenmitteilungen umfassend eine von jedem der Verbrauchsmessgeräte der ausgewählten Gruppe der Mehrzahl von Verbrauchsmessgeräten in dem Netzwerk auszuführende Anweisung rundzusenden und ein Token an die Datenmitteilung anzuhängen.

15. Verfahren zum Anweisen einer ausgewählten Gruppe einer Mehrzahl von Verbrauchsmessgeräten über eine in einem Netzwerk gesendete Datenmitteilung, wobei die ausgewählte Gruppe der Mehrzahl von Verbrauchsmessgeräten Teil eines Systems bildet, das einen Datensammler und eine Mehrzahl von Verbrauchsmessgeräten in einem Netzwerk angeordnet nach Anspruch 1-12 umfasst, wobei das Verfahren umfasst:
• in dem Datensammler:
∘ Senden eines Tokens über das Netzwerk an die ausgewählte Gruppe der Mehrzahl von Verbrauchsmessgeräten
∘ Empfangen oder Erzeugen einer Mitteilung, umfassend eine von jedem Verbrauchsmessgeräte der ausgewählten Gruppe der Mehrzahl von Verbrauchsmessgeräten auszuführenden Anweisung
∘ Anhängen eines Tokens an die Mitteilung und
∘ Rundsenden der Mitteilung in dem Netzwerk,
• in dem Verbrauchsmessgerät nach Empfang einer Datenmitteilung mit angehängtem Token:
∘ Vergleichen des Tokens mit gespeicherten Tokens,
∘ Akzeptieren der Datenmitteilung und Ausführen der Anweisung, falls das empfangene Token einem vor dem Empfang der Mitteilung in dem Verbrauchsmessgerät gespeicherten Token entspricht, ansonsten Ignorieren der Mitteilung.

16. Verfahren nach Anspruch 15, weiterhin umfassend:
• in dem Datensammler
∘ Erzeugen oder Empfangen eines der ausgewählten Gruppe der Mehrzahl von Verbrauchsmessgeräten in dem Netzwerk zugewiesenen Tokens,
∘ Adressieren des Tokens mithilfe der Messgerätekennung zur individuellen Identifizierung der Messgeräte in dem Netzwerk,
∘ Weiterleiten des Tokens über das Netzwerk zu jedem der Verbrauchsmessgeräte der ausgewählten Gruppe adressierter Messgeräte,
• in dem Verbrauchsmessgerät nach Empfang eines an das Messgerät adressierten Tokens:
∘ Speichern des Tokens in einem Messgerätspeicher.

## Revendications

1. Système (1) composé d'une pluralité de compteurs de consommation (2) étant chacun disposé pour mesurer des données de consommation d'une commodité fournie, et d'un collecteur de données (3) pour collecter les données de consommation, les compteurs de consommation et le collecteur de données comprenant une unité de communication pour la communication de données dans un réseau,
chaque compteur de consommation contenant un identifiant de compteur de manière à être identifiable individuellement dans le réseau, et chaque compteur de consommation étant capable de stocker un ou plusieurs jetons (26) reçus par l'intermédiaire du réseau, et chaque compteur de consommation étant capable d'exécuter une instruction comprise dans un message de données reçu par l'intermédiaire du réseau,
dans lequel le collecteur de données est disposé pour, dans une première étape, envoyer par l'intermédiaire du réseau un jeton vers un groupe sélectionné parmi la pluralité de compteurs de consommation,
dans lequel le collecteur de données est disposé pour, dans une deuxième étape, diffuser dans le réseau des messages de données comprenant une instruction devant être exécutée par chacun des compteurs de consommation du groupe sélectionné parmi la pluralité de compteurs de consommation, et pour associer un jeton au message de données,
dans lequel le compteur de consommation, à réception d'un message de données auquel est associé un jeton, compare le jeton avec tous les jetons stockés et, en cas de correspondance, accepte le message de données et exécute l'instruction ; sinon, il omet le message.

2. Le système selon la revendication 1, dans lequel le jeton est valide un certain nombre de fois, et dans lequel, une fois qu'un jeton a été utilisé ce nombre de fois, le jeton stocké par le compteur de consommation est effacé du compteur de consommation.

3. Le système selon la revendication 1, dans lequel le jeton est valide pendant une certaine période de temps, et dans lequel, quand cette période de temps est passée, le jeton stocké par le compteur de consommation est effacé.

4. Le système selon l'une quelconque des revendications précédentes, dans lequel le jeton est valide pour une fonctionnalité spécifiée.

5. Le système selon l'une quelconque des revendications précédentes, dans lequel le jeton est envoyé dans le réseau vers le groupe sélectionné parmi la pluralité de compteurs de consommation par une série de processus de monodiffusion, par un processus de multidiffusion, ou par une série de routages adressés dans le réseau.

6. Le système selon l'une quelconque des revendications précédentes, dans lequel le collecteur de données rediffuse une ou plusieurs fois le message auquel sont associés les jetons.

7. Le système selon l'une quelconque des revendications précédentes, dans lequel le message de données auquel sont associés les jetons n'est pas crypté.

8. Le système selon l'une quelconque des revendications 1 à 6, dans lequel chaque compteur de consommation stocke également une ou plusieurs clés de cryptage non uniques, et dans lequel le message de données auquel sont associés les jetons est crypté avec une clé de cryptage non unique.

9. Le système selon l'une quelconque des revendications précédentes, dans lequel le collecteur de données comprend un moteur de jetons qui maintient en permanence des listes de compteurs de consommation et de jetons associés et qui gère également la distribution de jetons, par l'intermédiaire du réseau, aux compteurs de consommation assignés.

10. Le système selon la revendication 9, dans lequel le collecteur de données est distribué sur d'autres entités reliées de manière communicante, et dans lequel le moteur de jetons est aussi distribué, et dans lequel une partie contrôlante du moteur de jetons réside dans une unité finale sécurisée, la partie contrôlante fournissant des instructions à une partie exécutante résidant à l'extérieur de l'unité finale sécurisée.

11. Le système selon la revendication 10, dans lequel chaque compteur de consommation stocke également une ou plusieurs clés de cryptage de jetons non uniques, et dans lequel le message de données auquel est associé le jeton est crypté avec la clé de cryptage de jetons, et dans lequel la clé de cryptage de jetons est stockée dans le compteur de consommation et dans l'unité finale sécurisée, mais pas dans la partie exécutante du moteur de jetons.

12. Le système selon l'une quelconque des revendications précédentes, dans lequel les jetons sont distribués aux compteurs de consommation assignés sous forme cryptée, et dans lequel un jeton est crypté avec une clé de cryptage individuelle du compteur de consommation auquel il est assigné.

13. Compteur de consommation (2) pour utilisation dans un système selon l'une quelconque des revendications 1 à 12, dans lequel le compteur de consommation est disposé pour mesurer des données de consommation d'une commodité fournie, et dans lequel le compteur de consommation comprend une unité de communication (20) pour la communication de données avec un collecteur de données assigné dans un réseau,
le compteur de consommation contient un identifiant de compteur de manière à être identifiable individuellement dans le réseau, et le compteur de consommation est capable de stocker un ou plusieurs jetons (26) reçus par l'intermédiaire du réseau, et est capable d'exécuter une instruction comprise dans un message de données reçu par l'intermédiaire du réseau,
à réception d'un message de données auquel est associé un jeton, le compteur de consommation compare le jeton avec tous les jetons stockés et, si le jeton reçu correspond à un jeton stocké, le compteur de consommation accepte le message de données et exécute l'instruction, sinon il omet le message.

14. Collecteur de données (3) pour utilisation dans un système selon l'une quelconque des revendications 1 à 12, dans lequel le collecteur de données est disposé pour collecter des données de consommation reçues d'un compteur de consommation (2) assigné, le collecteur de données comprend une unité de communication (21) pour la communication de données avec des compteurs de consommation assignés dans un réseau, et
dans lequel le collecteur de données est disposé pour, dans une première étape, envoyer des messages de données associés à un jeton à un groupe sélectionné parmi la pluralité de compteurs de consommation, et
dans lequel le collecteur de données est disposé pour, dans une deuxième étape, diffuser dans le réseau des messages de données comprenant une instruction devant être exécutée par chacun des compteurs de consommation du groupe sélectionné parmi la pluralité de compteurs de consommation, et pour associer un jeton au message de données.

15. Procédé d'envoi d'instructions à un groupe sélectionné parmi une pluralité de compteurs de consommation par l'intermédiaire d'un message de données envoyé dans un réseau, le groupe sélectionné parmi la pluralité de compteurs de consommation faisant partie d'un système comprenant un collecteur de données et une pluralité de compteurs de consommation disposés dans un réseau selon les revendications 1 à 12, le procédé comprenant :
• dans le collecteur de données :
∘ l'envoi, par l'intermédiaire du réseau, d'un jeton au groupe sélectionné parmi la pluralité de compteurs de consommation,
∘ la réception ou la production d'un message comprenant une instruction devant être exécutée par chacun des compteurs de consommation du groupe sélectionné parmi la pluralité de compteurs de consommation,
∘ l'association d'un jeton au message, et
∘ la diffusion du message dans le réseau,
• dans le compteur de consommation, à réception d'un message de données auquel est associé un jeton :
∘ la comparaison du jeton avec tous les jetons stockés,
∘ si le jeton reçu correspond à un jeton stocké dans le compteur de consommation avant la réception du message, l'acceptation du message de données et l'exécution de l'instruction ; sinon, l'omission du message.

16. Le procédé selon la revendication 15, comprenant également :
• dans le collecteur de données :
∘ la production ou la réception d'un jeton assigné au groupe sélectionné parmi la pluralité de compteurs de consommation dans le réseau,
∘ l'adressage du jeton au moyen de l'identifiant du compteur pour l'identification individuelle du compteur dans le réseau,
∘ la transmission du jeton, par l'intermédiaire du réseau, à chacun des compteurs de consommation du groupe sélectionné de compteurs adressés,
• dans le compteur de consommation, à réception d'un jeton adressé au compteur :
∘ le stockage du jeton dans un système de stockage du compteur.
